# EUROPEAN PATENT APPLICATION

(11) **EP 3 379 318 A1**
(43) Date of publication of application: **26.09.2018**
(21) Application number: 17305323.2
(22) Date of filing: 22.03.2017
(51) Int. Cl.: G02B 21/16, G01N 21/64, G01Q 40/02, G01N 21/27, G02B 21/34, G02B 21/24, G02B 27/00, G02B 21/36

(54) **A METHOD FOR CHARACTERIZING OPTICAL PROPERTIES OF A NON LINEAR IMAGING DEVICE USING HARMONIC GENERATION NANOPROBES**

(71) Applicant: Ecole Polytechnique, 91128 Palaiseau (FR); Centre National de la Recherche Scientifique, 75794 Paris Cedex 16 (FR)
(72) Inventor: SUPATTO, Willy, 91190 GIF-SUR-YVETTE (FR); MAHOU, Pierre, 91300 MASSY (FR); BEAUREPAIRE, Emmanuel, 91120 PALAISEAU (FR); MALKINSON, GUY, 75013 PARIS (FR); GACOIN, THIERRY, 91440 BURES-SUR-YVETTE (FR)
(74) Representative: Nony

(57) **Abstract**

Method for multi-spectral acquisition and processing of images in order to characterize at least one optical property of a non-linear imaging device, the method comprising:
- exciting at at least one wavelength a calibration tool (3) comprising a predefined distribution of harmonic generating nanoparticles (6);
- acquiring at least one optical signal generated by the calibration tool in response to this excitation; and
- processing the at least one signal to generate therefrom data useful to characterize said at least one optical property of the device.

## Description

The present invention relates to methods for characterizing the optical properties (spatial resolution, field curvature and chromatic aberrations) of non-linear (or multiphoton) imaging devices, in particular non-linear microscopes, and for calibrating such devices a nd processing images acquired therewith.

Non-linear microscopy, be it based on point-scanning, widefield or light-sheet illumination, has tremendously evolved over the last twenty years with a field of application constantly broadening. For instance, current trends consist of extending the range of excitation wavelengths to perform multi-parametric imaging. Indeed, some of them take advantage of the extended range of excitation wavelengths available with new laser sources, where optics are not necessarily characterized or corrected. In addition, several developments such as multicolor imaging, Coherent Anti-stokes Raman Scattering (CARS) microscopy or sum-frequency generation use multiple wavelengths of excitation and require perfect foci co-alignment at the sub-micrometer scale over large fields of view and wavelength ranges, making them critically sensitive to chromatic aberrations. In general, the precise calibration of nonlinear systems over a broad range of wavelengths is critical. However, available protocols, to achieve such metrology, are very challenging to implement.

So far, few solutions have been proposed to characterize the performances of non-linear microscopes, namely the spatial resolution, field curvature and chromatic aberrations. The use of fluorescent beads is currently the gold standard to assess these performances. Nevertheless, their excitation spectrum is usually restricted and their emission spectrum large so that calibration of the system over a broad range of excitation wavelengths remains challenging. Besides, direct comparison between different wavelengths, systems or optics in terms of collected photons is limited when using fluorescent probes due to several optical phenomena like fluorescence signal bleaching, blinking and saturation.

As an alternative to the use of fluorescent probes, harmonic generating nanoparticles (Second or Third Harmonic Generating nanoparticles) have recently emerged to circumvent many drawbacks of the fluorescent probes. Their optical signal does not bleach, blink or saturate, as it is based on non-linear scattering, rather than absorption in the case of fluorescence.

Second Harmonic Generating (SHG) nano-probes have been used in US 8 945 471 B2 for multi-purpose imaging of samples and to monitor nucleotide sequencing in a Multi-SHG Detection Imaging (MSDI).

The article *"SHG nanoprobes: Advancing Harmonic imaging in biology", W.P. Dempsey, S.E. Fraser and P. Pantazis* published in Bio Essays Journal highlights the advantages of SHG nanoparticles in biological imaging.

However, there remains a need to improve current metrology techniques in non-linear imaging devices, and more particularly to aid in the characterization of optical performances of a non-linear imaging device, to calibrate it and/or to process acquired images in order to improve their alignment.

The present invention aims to meet this need and one object of the invention is a method for multi-spectral acquisition and processing of images in order to characterize at least one optical property of a non-linear imaging device, in particular a microscope and/or to calibrate such device, comprising:
- exciting at at least one wavelength a calibration tool comprising a predefined distribution of harmonic generating nanoparticles;
- acquiring at least one optical signal generated by the calibration tool in response to this excitation; and
- processing said at least one signal to generate therefrom data useful to characterize said at least one optical property of the device.

The method according to the invention allows to calibrate any non-linear microscope over a broad range of excitation wavelengths using a single point-like nonlinear scatterer, whereas in case of fluorescent probes, it would have been necessary to use at least two different fluorophores.

Unlike fluorescent probes, the nanoparticles according to the present invention can be excited at any arbitrary wavelength, covering the entire laser source wavelength range, while the harmonic signal detected has a narrow spectrum at exactly half or a third of the excitation wavelength, for second and third harmonics, respectively.

Preferably, the method comprises exciting the nanoparticles at at least two wavelengths. In case of at least two wavelengths exciting the nanoparticles, the invention provides a straightforward method to measure lateral and axial chromatic aberrations across the field of view.

The invention makes it possible to assess easily and compare performances of different equipment, e.g. scanning systems, objectives, lenses, dichroic mirrors, etc.

In case of at least two wavelengths exciting the nanoparticles, the invention also allows to easily correct images by digital post-processing after their acquisition and/or to register them.

### Nanoparticles

Preferably, said predefined distribution of nanoparticles in the calibration tool is homogenous across the field of view.

The harmonic generating nanoparticles may be at any order, such as Second Harmonic Generating (SHG) or Third Harmonic Generating (THG).

Each of the nanoparticles may be selected from the group consisting of BaTiO3, SiC, ZnO, ZnS, ZnSe, ZnTe, CdS, CdSe, CdTe, GaAs, GaSb, GaP, GaN, InSb, LiNbO3, KNbO3, KTiOPO4 Fe(IO3)3, Au, Ag, N-(4-nitrophenyl)-(L)-prolinol (NPP), urea, 4-Nitroaniline, 2-Methyl-4-nitroaniline (MNA), 3-Methyl-4-methoxy-4'-nitrostilbene), β-BaB2O4 (Beta-Barium Borate/BBO, LiB3O5 (Lithium Triborate/LBO), LiNbO3 (Lithium Niobate/LN), KTiOPO4 (Potassium Titanyl Phosphate/KTP), AgGaS2 (Silver Thiogallate/AGS), AgGaSe2 (Silver Gallium Selenide/AGSe), ZnGeP2 (Zinc Germanium Phosphide/ZGP), GaSe (Gallium Selenide), KH2PO4 (Potassium Dihydrogen Phosphate/KDP), NH4H2PO4 (Ammonium Dihydrogen Phosphate (ADP), KD2PO4 (Deuterated Potassium Dihydrogen Phosphate/DKDP), CsLiB6O10 (Cesium Lithium Borate/CLBO), KTiOAsO4 (Potassium Titanyl Arsenate/KTA), KNbO3 (Potassium Niobate/KN), LiTaO3 (Lithium Tantalate/LT), RbTiOAsO4 (Rubidium Titanyl Arsenate/RTA), BaTiO3 (Barium Titanate), MgBaF4 (Magnesium Barium Fluoride), GaAs (Gallium Arsenide), BiB3O6 (Bismuth Triborate/BIBO), K2Al2B2O7 (Potassium Aluminum Borate/KABO), KBe2BO3F2 (Potassium Fluoroboratoberyllate/KBBF), BaAlBO3F2 (Barium Aluminum Fluoroborate/BABF), La2CaB10O19 (Lanthanum Calcium Borate/LCB), GdCa4O(BO3)3 (Gadolinium Calcium Oxyborate/GdCOB), YCa4O (BO3)3 (Yttrium Calcium Oxyborate/YCOB), Li2B4O7 (Lithium Tetraborate/LB4), LiRbB4O7 (Lithium Rubidium Tetraborate/LRB4), CdHg(SCN)4 (Cadmium Mercury Thiocyanate/CMTC), RbTiOPO4 (Rubidium Titanyl Phosphate/RTP), LiInS2 (Lithium Thioindate/LIS), LiInSe2 (Lithium Indium Selenide/LISe), KB5O8.4H2O (Potassium Pentaborate Tetrahydrate/KB5), CsB3O5 (Cesium Triborate/CBO), C4H7D12N4PO7 (Deuterated L-Arginine Phosphate Monohydrate/DLAP), a-HIO3 (a-Iodic Acid), LiCOOH.H2O (Lithium Formate Monohydrate/LFM), CsH2AsO4 (Cesium Dihydrogen Arsenate/CDA), CsD2AsO4 (Deuterated Cesium Dihydrogen Arsenate/DCDA), RbH2PO4 (Rubidium Dihydrogen Phosphate/RDP), CsTiOAsO4 (Cesium Titanyl Arsenate/CTA), Ba2NaNb5O15 (Barium Sodium Niobate/BNN), K3Li2Nb5O15 (Potassium Lithium Niobate/KLN), CO(NH2)2 (Urea), LiIO3 (Lithium Iodate), Ag3AsS3 (Proustite), HgGa2S4 (Mercury Thiogallate), CdGeAs2 (Cadmium Germanium Arsenide/CGA), Ti3AsSe3 (Thallium Arsenic Selenide/TAS), CdSe (Cadmium Selenide), ZnO (Zinc Oxide), ZnS (Zinc Sulfide), ZnSe (Zinc Selenide), ZnTe (Zinc Telluride), CdS (Cadmium Sulfide), SiC (Silicon Carbide), GaN (Gallium Nitride), GaSb (Gallium Antimonide), and their mixtures.

At least one optical property may be the spatial resolution of the imaging device or the field curvature.

In case of at least two wavelengths exciting the nanoparticles, the optical property that is assessed may be the chromatic aberrations.

The nanoparticles are preferably electrostatically charged so that they may adhere on a flat substrate coated with a polymer exhibiting the opposite charge. For example, negatively charged particles may be deposited on a substrate coated with, for example, PolyLysine. Positively charged particles may be deposited on a substrate coated with, for example, sodium polysulfonate. In a variant, nanoparticles that are stable as a colloidal suspension in water solution can be embedded and 3D-distributed in a gel. This gel may be for example water-soluble.

Preferably, the nanoparticles have a greatest dimension less than that of a dimension defining a focal volume of the device, preferably less than 200 nm. The concentration of the nanoparticles is preferably low enough for the distance between two adjacent nanoparticles to be greater than a dimension defining a focal volume of the device. Clusters are thus avoided so as to simplify processing and interpretation thereafter. The surface concentration of nanoparticles in the field of view of the imaging device is preferably less than 1 nanoparticle/ µm².

The nanoparticles do not need to have a mono-crystalline structure and their surface does not need to be regular or smooth.

For long term storage, the nanoparticles are preferably sealed within the calibration tool; they may be imprisoned between two transparent planar substrates, which are sealed together.

### Non-linear imaging device

The invention applies to various non-linear imaging devices.

The imaging device may be selected inter alia among:
- point-scanning microscopes;
- light-sheet microscopes (Selective Plane Illumination Microscope (SPIM));
- temporal focusing microscopes;
- multifocal multiphoton microscopes; and
- widefield multiphoton microscopes.

Another object of the invention is a method for processing a digital image acquired by means of a non-linear imaging device, in particular a microscope, wherein the digital image is processed so as to correct at least one optical defect in the device, this defect being determined by implementation of the method as defined above.

Exemplary embodiments of the present invention also relate to a method for comparing a plurality of non-linear imaging devices, notably microscopes, wherein at least one optical property of each of these devices is characterized by the method according to the invention and the optical properties thus characterized are compared.

Another object of the invention is a method for correcting at least one optical defect in a non-linear imaging device, especially a microscope, with the aid of a correcting element added to the optics, wherein said defect has been characterized by implementation of the method according to the invention, as defined above, using the calibration tool.

The invention, according to another of its aspects, relates to a calibration tool, notably for implementing the method according to the invention, the calibration tool comprising:
- a substrate; and
- harmonic generating nanoparticles arranged according to a predefined distribution on the substrate.

The nanoparticles are as defined above.

The invention will be better understood on reading the following detailed description of non-limiting exemplary embodiments thereof and on examining the appended drawings, in which:
- Figures 1a to 1c represent examples of calibration tools for implementing the method according to the invention;
- Figure 2 illustrates different configurations of the calibration tool with respect to the non-linear optical device;
- Figure 3 is a SHG signal image of KTP nanoparticles collected in the backward direction;
- Figure 4 depicts the intensity of the coherent signal generated by SHG nanoparticles versus the average excitation power;
- Figure 5 shows multi-spectral SHG images of nanoparticles;
- Figures 6a to 6d are examples of characterization of the resolution and field curvature;
- Figures 7a to 7c illustrate post processing correction of lateral chromatic aberrations.

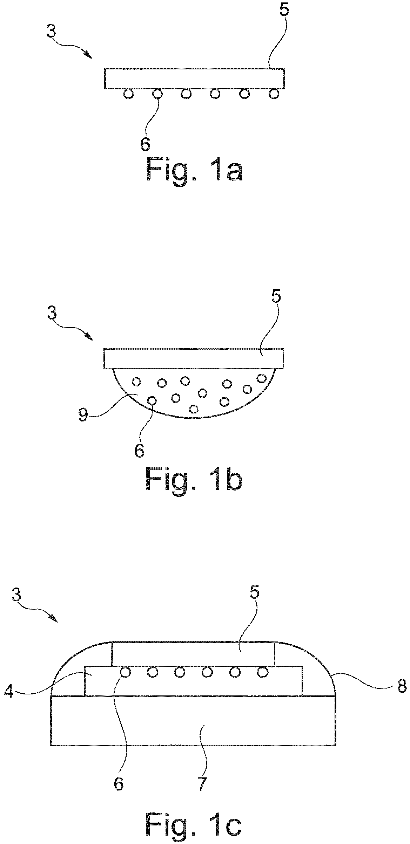

The calibration tool 3 of Figure 1a comprises SHG nanoparticles 6 attached to a surface of a planar substrate 5. The particles 6 form a simple layer of particles. They may have been deposited on the substrate 5 as a dispersion of a water-soluble colloidal suspension. The distribution of nanoparticles is preferably homogenous across the field of view. The substrate 5 may also be referred to as a coverslip.

The calibration tool 3 shown in Figure 1b differs from the embodiment of Figure 1a by the distribution of the particles 6, which is 3D in a water-soluble gel 9.

In the variant of Figure 1c, the nanoparticles 6 are dispersed in a medium 4 imprisoned between planar substrates 5 and 7, which may be referred to as coverslip and coverglass, respectively.

The medium 4 may be confined by a seal 8 extending at the periphery of substrate 5 between the latter and substrate 7.

The substrates 5 and 7 are preferably made of borosilicate glass.

As shown, the upper substrate 5 may be thinner than the lower substrate 7. Relative dimensions on the figures do not necessarily match reality.

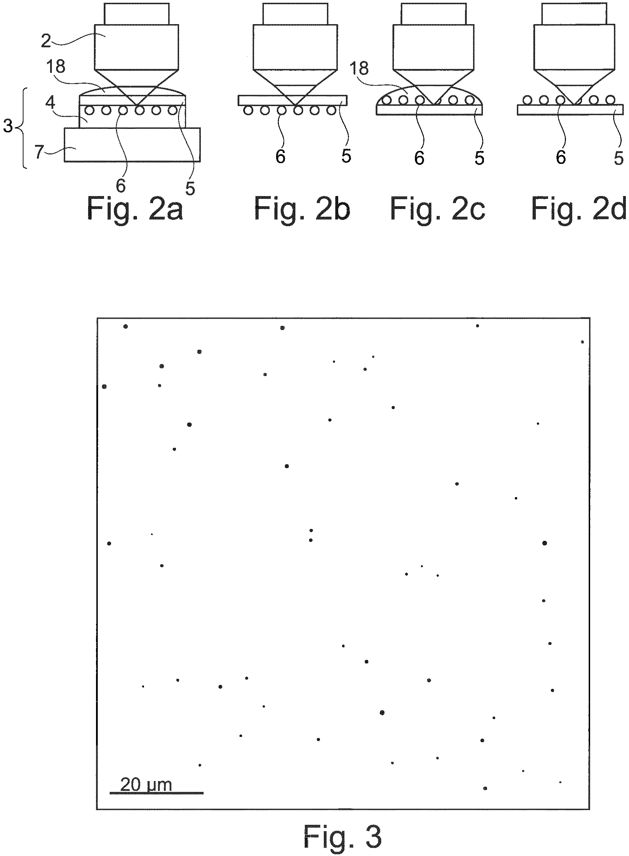

Several configurations of using these calibration tools 3 are shown in Figure 2.

The non-linear imaging device is in this example a point scanning microscope that is not wholly shown. It comprises an immersion objective 2 transmitting excitation light.

In Figures 2a and 2b, imaging is performed through the substrate 5. A liquid medium 18 may be present at the interface between substrate 5 and the objective 2, as shown in Figure 2a.

In the variant of Figure 2b, the objective 2 is immersed in air.

In the variants of Figures 2c and 2d, imaging is not performed through the substrate 5, as the particles 6 face the objective 2.

In the variant of Figure 2c, the objective 2 is immersed in the liquid medium 18, which may be water of an aqueous solution.

In the variant of Figure 2d, the objective 2 is immersed in air.

The SHG nanoparticles 6 are dispersed at a low concentration on the coverslip 5.

To characterize the optical properties of the imaging device, one may proceed by exciting the nanoparticles at at least one wavelength λ. At least one optical response signal is then acquired by the non-linear imaging device.

This signal is processed so as to produce information useful to characterize optical properties of the non-linear imaging device, e.g. a resolution of the imaging device, a field curvature, or chromatic aberrations.

By varying the excitation wavelength, one may characterize the optical property at various wavelengths. Excitation at at least two wavelengths using the same calibration tool is useful to compare responses at these wavelengths and may help register images acquired at these wavelengths.

The excitation of the nanoparticles may be performed at at least two wavelengths λ₁ and λ₂ and the at least two resulting images can be recorded simultaneously or sequentially. The acquisition may be performed from different angles of view.

### Example

In this example, the acquisition is performed as shown in Figure 2a. The immersion objective 2 transmits excitation light in a range between 850 and 1100nm. The immersion medium has a refractive index of 1.334 and the nanoparticles 6 are KTP (KTiOPO4) nanoparticles.

To prepare the calibration tool, KTP nanoparticles with a mean diameter of 150 nm are attached to a surface of the microscope coverslip 5 that is charged positively by being coated with Poly-D-Lysine or Poly-L-Lysine. KTP nanoparticles which are negatively charged adhere to this coated layer due to electrostatic forces.

A sparse and homogeneous distribution of nanoparticles are obtained by carefully optimizing the dilution, exposition time and sonication conditions, as depicted in Figure 3.

The coverslip's thickness in the field of view ranges between 0.165 and 0.175mm and that of the coverglass between 0.8 and 1mm. The latter is sealed with nail polish for long term storage.

The image of Figure 3 is obtained at excitation wavelength of 850nm and a detection band of 415-485nm. Of course, analogous results could be obtained using other objective types, different excitation wavelength and detection band.

The calibration tool permits to image the nanoparticles in a nonlinear point-scanning microscope without introducing additional aberrations which could compromise the estimation of the resolution, field curvature and lateral and axial chromatic aberrations across the field of view.

### Characterizing optical properties of microscopes

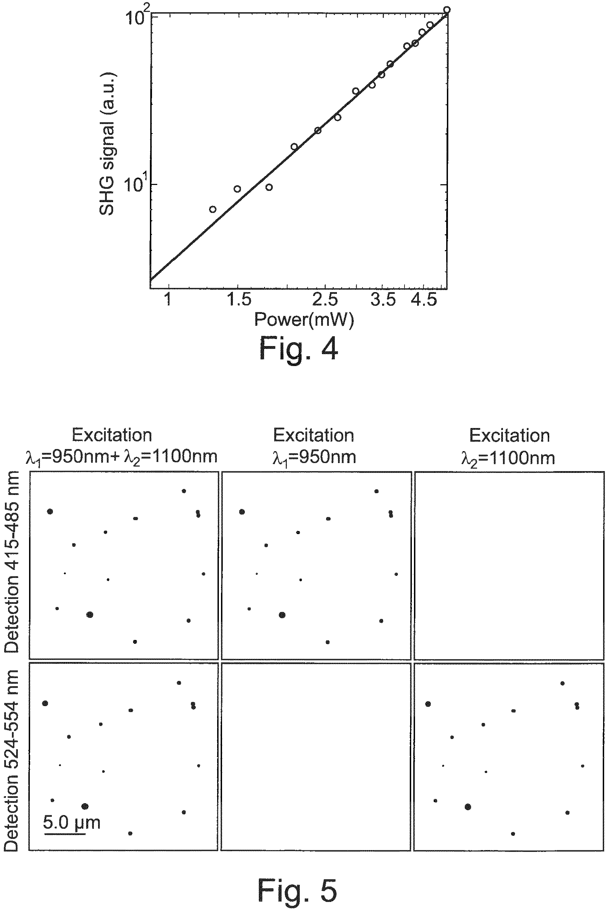

The intensity of the coherent signal generated by the SHG nanoparticles is proportional to the square of the average excitation power. Figure 4 illustrates the quadratic intensity dependence on the average excitation power for an excitation wavelength λ₁ = 950nm. An analogous result could be obtained using another value of excitation wavelength.

Figure 5 shows multi-spectral SHG imaging of nanoparticles obtained with the tested microscope objective, at an excitation wavelength λ₁ = 950 nm or λ₂ = 1100 nm, detection bands 415-485 nm and 524-554 nm. Signals are narrow-band and centred on half the excitation wavelengths. Simultaneous multispectral acquisition can be performed with negligible bleed through. The detection band and excitation wavelength values are given as mere examples, and analogous results could be obtained using different parameters or a different objective.

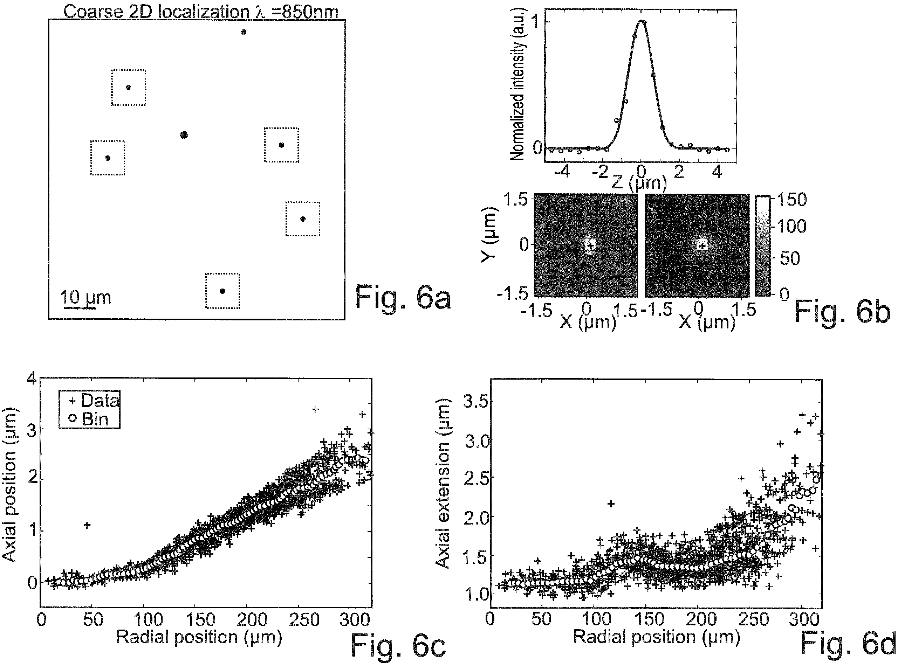

The lateral and axial resolutions of a microscope may be quantified across the whole imaging field of view. To quantify the field curvature and the tilting of the imaging plane at a sub-micrometer scale, the nanoparticles are localized laterally and axially by fitting respectively the axial and lateral profile of the point spread function with model functions (see Figures 6a and 6b). As can be seen from Figures 6c and 6d, the imaging plane deviates from a flat surface, which is a hallmark of the field curvature aberration. This information is particularly important when tilled acquisitions are performed at shifted lateral positions to obtain a large image after stitching.

The axial and lateral chromatic shifts are extracted across the field of view from the 3D imaging of individual nanoparticles at several excitation wavelengths. For this purpose, 3D z-stacks are recorded at different excitation wavelengths simultaneously or sequentially and the chromatic shifts are quantified by comparing the lateral and axial positions of each nanoparticle imaged at the different excitation wavelengths. Thus, 2D maps containing the relative positions of one foci compared to another are computed for different couples of excitation wavelengths. This provides information about the relative registration between different channels in multicolor acquisitions. These 2D maps can be used to rescale different channels with each other in post-processing. Alternatively, the method could be used to select a better optical component and reduce chromatic aberrations of the microscope or as a feedback to maintain a good foci co-registration over the whole field of view.

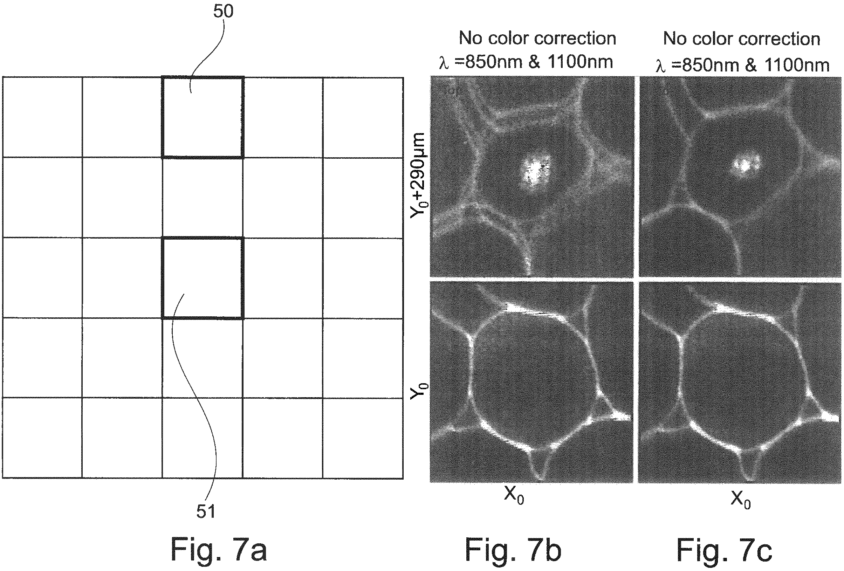

Figure 7a schematically represents lateral displacements for two excitation wavelengths for two different positions 50, 51 across the field of view. Objects are aligned/misaligned in the center/edge of the field of view respectively.

Figure 7b illustrates multicolor acquisition with no color correction, at the excitation wavelengths 850nm and 1100nm. The two channels are co-registered in the center of the field of view but misaligned at the edge of the field of view. Figure 7c represents corrected images for lateral chromatic aberrations in post processing by using the calibration estimated from the acquisitions on the KTP nanoparticles.

The invention is not limited to the examples that have just been described and applies to other non-linear imaging microscopy techniques, such as light-sheet, temporal focusing, multifocal multiphoton, widefield multiphoton, etc. and using other harmonic generation nanoparticles.

The invention may be used in several applications such as: metrology in non-linear imaging devices, digital post-processing of images and bio-compatible applications.

The expression "comprising a" or "including a" must be understood as being synonymous with "comprising at least one" or "including at least one", unless specified otherwise.

## Claims

1. Method for multi-spectral acquisition and processing of images in order to characterize at least one optical property of a non-linear imaging device, the method comprising:
- exciting at at least one wavelength a calibration tool (3) comprising a predefined distribution of harmonic generating nanoparticles (6);
- acquiring at least one optical signal generated by the calibration tool in response to this excitation; and
- processing the at least one signal to generate therefrom data useful to characterize said at least one optical property of the device.

2. Method according to the preceding claim, wherein the excitation is made at at least two different wavelengths (λ₁, λ₂).

3. Method according to claim 2, further comprising registration of images acquired at different wavelengths based on images of said nanoparticles at said wavelengths.

4. Method according to any one of the preceding claims, wherein the predefined distribution is homogenous across the field of view.

5. Method according to any one of the preceding claims, wherein the nanoparticles (6) comprise third harmonic generating (THG) nanoparticles and/or second harmonic generating (SHG) nanoparticles, and are preferably selected from the group consisting of BaTiO3, SiC, ZnO, ZnS, ZnSe, ZnTe, CdS, CdSe, CdTe, GaAs, GaSb, GaP, GaN, InSb, LiNbO3, KNbO3, KTiOPO4, Fe(IO3)3, Au, Ag, N-(4-nitrophenyl)-(L)-prolinol (NPP), urea, 4-Nitroaniline, 2-Methyl-4-nitroaniline (MNA), 3-Methyl-4-methoxy-4'-nitrostilbene), β-BaB2O4 (Beta-Barium Borate/BBO, LiB3O5 (Lithium Triborate/LBO), LiNbO3 (Lithium Niobate/LN), KTiOPO4 (Potassium Titanyl Phosphate/KTP), AgGaS2 (Silver Thiogallate/AGS), AgGaSe2 (Silver Gallium Selenide/AGSe), ZnGeP2 (Zinc Germanium Phosphide/ZGP), GaSe (Gallium Selenide), KH2PO4 (Potassium Dihydrogen Phosphate/KDP), NH4H2PO4 (Ammonium Dihydrogen Phosphate (ADP), KD2PO4 (Deuterated Potassium Dihydrogen Phosphate/DKDP), CsLiB6O10 (Cesium Lithium Borate/CLBO), KTiOAsO4 (Potassium Titanyl Arsenate/KTA), KNbO3 (Potassium Niobate/KN), LiTaO3 (Lithium Tantalate/LT), RbTiOAsO4 (Rubidium Titanyl Arsenate/RTA), BaTiO3 (Barium Titanate), MgBaF4 (Magnesium Barium Fluoride), GaAs (Gallium Arsenide), BiB3O6 (Bismuth Triborate/BIBO), K2A12B2O7 (Potassium Aluminum Borate/KABO), KBe2BO3F2 (Potassium Fluoroboratoberyllate/KBBF), BaAlBO3F2 (Barium Aluminum Fluoroborate/BABF), La2CaB10O19 (Lanthanum Calcium Borate/LCB), GdCa4O(BO3)3 (Gadolinium Calcium Oxyborate/GdCOB), YCa4O (BO3)3 (Yttrium Calcium Oxyborate/YCOB), Li2B4O7 (Lithium Tetraborate/LB4), LiRbB4O7 (Lithium Rubidium Tetraborate/LRB4), CdHg(SCN)4 (Cadmium Mercury Thiocyanate/CMTC), RbTiOPO4 (Rubidium Titanyl Phosphate/RTP), LiInS2 (Lithium Thioindate/LIS), LiInSe2 (Lithium Indium Selenide/LISe), KB5O8.4H2O (Potassium Pentaborate Tetrahydrate/KB5), CsB3O5 (Cesium Triborate/CBO), C4H7D12N4PO7 (Deuterated L-Arginine Phosphate Monohydrate/DLAP), a-HIO3 (a-Iodic Acid), LiCOOH.H2O (Lithium Formate Monohydrate/LFM), CsH2AsO4 (Cesium Dihydrogen Arsenate/CDA), CsD2AsO4 (Deuterated Cesium Dihydrogen Arsenate/DCDA), RbH2PO4 (Rubidium Dihydrogen Phosphate/RDP), CsTiOAsO4 (Cesium Titanyl Arsenate/CTA), Ba2NaNb5O15 (Barium Sodium Niobate/BNN), K3Li2Nb5O15 (Potassium Lithium Niobate/KLN), CO(NH2)2 (Urea), LiIO3 (Lithium Iodate), Ag3AsS3 (Proustite), HgGa2S4 (Mercury Thiogallate), CdGeAs2 (Cadmium Germanium Arsenide/CGA), Ti3AsSe3 (Thallium Arsenic Selenide/TAS), CdSe (Cadmium Selenide), ZnO (Zinc Oxide), ZnS (Zinc Sulfide), ZnSe (Zinc Selenide), ZnTe (Zinc Telluride), CdS (Cadmium Sulfide), SiC (Silicon Carbide), GaN (Gallium Nitride), GaSb (Gallium Antimonide), and their mixtures.

6. Method according to any one of the preceding claims, wherein said at least one optical property is selected from:
- a spatial resolution of the imaging device; and
- a field curvature.

7. Method according to any one of the preceding claims, including claim 2, wherein said at least one optical property is a chromatic aberration.

8. Method according to any one of the preceding claims, wherein the nanoparticles (6) are negatively charged.

9. Method according to any one of the preceding claims, wherein the nanoparticles (6) are dispersed in a water-soluble colloidal suspension or the nanoparticles (6) are 3D-distributed in a gel.

10. Method according to any one of the preceding claims, wherein a distance between two adjacent nanoparticles (6) is greater than a dimension defining a focal volume of the device and/or the surface concentration of nanoparticles (6) in the field of view of the imaging device is less than 1 nanoparticle/ µm².

11. Method according to any one of the preceding claims, wherein the imaging device is selected from:
- a point-scanning microscope;
- a light-sheet microscope (Selective Plane Illumination Microscope (SPIM));
- a temporal focusing microscope;
- a multifocal multiphoton microscope; and
- a widefield multiphoton microscope.

12. Method for processing a digital image acquired by means of a non-linear imaging device, in particular a microscope, wherein the digital image is processed so as to correct at least one optical defect in the device determined by implementation of the method according to any one of the preceding claims.

13. Method for correcting at least one optical defect in a non-linear imaging device, especially a microscope, with the aid of a correcting element added to the optics, wherein said defect has been **characterized by** implementation of the method according to any one of claims 1 to 11.

14. Calibration tool (3), notably for implementing the method according to any one of claims 1 to 11 comprising:
- a substrate (5); and
- harmonic generating nanoparticles (6) arranged according to a predefined distribution on the substrate (5).

15. Calibration tool (3) according to claim 14, the nanoparticles being imprisoned between two sealed substrates (5,7).
